**Europäisches Patentamt**

**European Patent Office**

**Office européen des brevets**

(19)

(11) Veröffentlichungsnummer : **0 083 306**
**B1**

(12) **EUROPÄISCHE PATENTSCHRIFT**

(45) Veröffentlichungstag der Patentschrift :
26.03.86

(51) Int. Cl.⁴ : **H 02 H 9/08**

(21) Anmeldenummer : **82810553.6**

(22) Anmeldetag : **20.12.82**

(54) **Verfahren und Vorrichtung zur Regulierung wenigstens einer Löschspule in einem mehrphasigen Netz.**

(30) Priorität : **22.12.81 CH 8183/81**
**10.12.82 CH 7201/82**

(43) Veröffentlichungstag der Anmeldung :
**06.07.83 Patentblatt 83/27**

(45) Bekanntmachung des Hinweises auf die Patenterteilung : **26.03.86 Patentblatt 86/13**

(84) Benannte Vertragsstaaten :
**AT BE CH DE FR GB IT LI LU NL SE**

(56) Entgegenhaltungen :
**DE-A- 2 400 527**
**DE-C-   399 136**
**DE-C-   760 151**
**FR-A- 1 057 276**
**FR-A- 2 161 752**

(73) Patentinhaber : **Elektrizitätswerke des Kantons**
**Zürich**
**Postfach Dreikönigstrasse 18**
**CH-8002 Zürich (CH)**

(72) Erfinder : **Baumgartner, Hans**
**Werkstrasse 1**
**CH-8910 Affoltern a.A. (CH)**
Erfinder : **Schreiber, Rolf**
**Einsiedlerstrasse 42**
**CH-8810 Horgen (CH)**

(74) Vertreter : **Frauenknecht, Alois J. et al**
**c/o PPS Polyvalent Patent Service AG Fohrhölzlis-**
**trasse 19**
**CH-5443 Niederrohrdorf (CH)**

**Beschreibung**

Die vorliegende Erfindung betrifft ein Verfahren und eine Vorrichtung zur Regulierung wenigstens einer Löschspule in einem mehrphasigen Netz, in dem der Nullpunkt der Sekundärseite eines Transformators über eine Löschspule geerdet ist.

Es sind automatische Löschspulen-Regulierungen bekannt, die sich im Prinzip auf eine Sammelschiene beziehen. Bei zwei oder mehreren Sammelschienen beeinflussen sich die Regulierungsgeräte gegeneinander, wenn man sie parallel betreibt. Das hat zur Folge, dass es bei diesen Anordnungen zu Schwingungen kommen kann, weil diese Geräte ihre Spannungen suchen müssen und somit von unten nach oben laufen, bis sie den Resonanzpunkt erreichen. Wenn der Resonanzpunkt erreicht wird, wird die Spannung zurückverfolgt und auf einen Wert von z. B. − 10 % unterhalb der Resonanz eingestellt. Wenn aber zwei solche Geräte parallel geschaltet werden, dann beeinflusst die eine Regulierung die andere. Wenn also ein Apparat die Induktivität der Löschspule verstellt, hat das zur Folge, dass die Induktivität für den zweiten Messkreis sich ebenfalls ändert. Somit beginnt sich der zweite Messkreis ebenfalls einzustellen und die ganze Löschspulenregulierung zu schaukeln. Im Falle eines Erdschlusses wird diese automatische Löschspulenregulierung blockiert, weil sie die Resonanzkurve nicht mehr messen kann. Die Resonanzspannung wird schlagartig auf einen hohen Wert, z. B. auf 9 000 Volt, erhöht. Wenn die Resonanzspannung die Höhe der Phasenspannung erreicht, gibt es keinen Anhaltspunkt mehr für die Regulation.

Der Erfindung liegt die Aufgabe zugrunde, die Nachteile des Bekannten zu beseitigen und ein Verfahren und eine Vorrichtung zur Regulierung wenigstens einer Löschspule in einem gelöschten mehrphasigen Netz zu schaffen, bei welchen das Abtasten der Spannung nicht notwendig ist und die auch für Anordnungen mit mehreren Sammelschienen bzw. mehreren Löschspulen und auch bei einem nicht satten Endschluss die richtige Regulierung der wenigstens einen Löschspule sichern.

Die vorgenannte Aufgabe wird dadurch gelöst, dass für die Regulierung der Löschspule im gesunden Netz ein Vorgabewert des kapazitiven Stromes ermittelt wird, der der Summe der Vorgabewerte der kapazitiven Ströme für die Linien des Netzes entspricht, dass dieser Vorgabewert des kapazitiven Stromes, der den Sollwert des kapazitiven Stromes bildet, mit dem über einen Winkeltransmitter entsprechend der Stellung der Löschspule gelieferten Istwert des induktiven Stromes betragsmässig verglichen wird, dass aus diesem Vergleich des induktiven Ist- und des kapazitiven Sollwertes der Ströme die Steuerung der Löschspule abgeleitet wird, dass der Sollwert des kapazitiven Stromes in einem Summierverstärker mit einem Erdschlusskriterium beeinflusst wird und dass der Vorgabewert des kapazitiven Stromes jeder Linie an Codierschaltern eingestellt wird, wobei der Vorgabewert des kapazitiven Stromes für wenigstens eine Linie auf einen Prozentualanteil des Sollwertes des kapazitiven Stromes für den Resonanzfall eingestellt wird.

Der Vorteil der Erfindung ist darin zu sehen, dass die Regulierung der Löschspule praktisch durch die Vorgabewerte gegeben wird und dass man kein Abtasten der Spannungskurve verwenden muss.

Die Vorgabewerte kann man frei wählen, wobei auch die Möglichkeit besteht, die Vorgabewerte während des Betriebes nicht mehr zu ändern, sondern, wenn zweckmässig, die entsprechende Linie auf eine andere Sammelschiene umzuschalten. Somit erreicht man, dass bei einem Erdschluss die Löschspule tatsächlich eingestellt wird.

Es ist zweckmässig, wenn das Steigen oder Sinken des Istwertes des induktiven Stromes der Löschspule solange den Vergleicher über den Winkeltransmitter beeinflusst, bis der Betrag des induktiven Istwertes und des kapazitiven Sollwertes der beiden Ströme identisch ist.

Nach einer vorteilhaften Weiterbildung wird im gesunden Netz die Löschspule um einen Faktor 0,8 bis 1,2 eingestellt und somit die gewünschte Unter- oder Überkompensation erreicht.

Es ist zweckmässig, wenn der kapazitive Strom im Netz zur Einstellung der Regulierung der Löschspule L nach der Gleichung

$$I_C = \frac{I_{LO}}{U_{LO}} \cdot \frac{U}{\sqrt{3}}$$

bestimmt wird, wobei mit $I_C$ der Strom bei Erdschluss mit niederohmiger Fehlerstelle, mit $I_{LO}$ der Strom der Löschspule L bei gesundem Netz, mit $U_{LO}$ die Spannung der Löschspule L bei gesundem Netz und mit U über $\sqrt{3}$ die Phasenspannung bei gesundem Netz bezeichnet sind.

Es ist vorteilhaft, wenn das Erdschlusskriterium aus einer selektiven Erdschlussanzeige abgeleitet wird, wobei die Summen der Ströme der drei Phasen in den einzelnen Linien mit je einem Summenstromwandler erfasst werden, dass die Vektorrichtungen der sekundären Ströme der Summenstromwandler der einzelnen Linien verglichen werden und dass danach entsprechend der Änderung der Vektorrichtung der Summe des Stromes in einer bestimmten Linie festgestellt wird, dass sich der Erdschluss in dieser Linie befindet.

Die durch diese Weiterbildung erreichten Vorteile sind im wesentlichen darin zu sehen, dass die beschriebene selektive Erdschlussanzeige zuverlässig funktionsfähig ist. Alle kapazitiven Ströme in den gesunden Linien haben die gleiche Richtung, weil alle noch vorhandenen Netzkapazitäten an derselben Transformatorspannung liegen. Die über die Summenstromwandler der gesunden Linien gemessenen Ströme bilden also Vektoren, die parallel in derselben Richtung verlaufen. Die gestörte Linie führt dagegen im gelöschten Netz ausser dem kapazitiven Strom noch einen über die Fehlerstelle fliessenden Wirkstrom. Somit weist der Vektor des sekundären Stroms dieses Summenstromwandlers eine andere Richtung auf und schliesst mit den Vektoren der Ströme der gesunden Linien einen bestimmten Winkel ein.

Zweckmässigerweise werden durch die Nulldurchgänge jeder zweiten Halbwelle der Summe des Stromes jeder Linie Rechteck-Impulse generiert werden, deren zeitliche Verschiebungen mit einem, einer Netzabbildung entnommenen Sollwert über eine Kippschaltung verglichen werden, wobei danach entsprechend der Änderung der Vektorrichtung der Summe des Stromes in einer bestimmten Linie festgestellt wird, dass sich der Erdschluss in dieser Linie befindet.

Es ist zweckmässig, wenn die Änderung der Vektorrichtung der Summe des Stromes in jeder Linie durch dessen relative zeitliche Verschiebung der Nulldurchgänge festgestellt wird.

Die Vorrichtung zur Regulierung wenigstens einer Löschspule in einem mehrphasigen Netz, in dem der Nullpunkt der Sekundärseite eines Transformators über eine Löschspule geerdet ist, wobei die Ausgänge der Sekundärseite des Transformators an die Sammelschiene der Phasen und somit auch an die zugehörigen Linien des Netzes angeschlossen sind, wobei die Vorrichtung zur Durchführung des Verfahrens nach Anspruch 1 vorgesehen ist, besteht darin, dass an einen Vergleicher einerseits Digital-Analog-Wandler mit zugehörigen Codierschaltern über einen Summierverstärker mit variabler Verstärkung, die durch ein Erdschlußkriterium beeinflußt wird, und andererseits ein die Einstellung der Löschspule angebender Winkeltransmitter angeschlossen sind, wobei der Vergleicher über eine Relais-Anordnung mit dem Motorantrieb der Löschspule verbunden ist, dass zur Ableitung des Erdschlußkriteriums in jeder Linie des Netzes ein alle drei Phasen erfassender Summenstromwandler angeordnet ist und dass Sekundär-Wicklungen dieses Summenstromwandlers an eine elektronische Vorrichtung zur Feststellung der Vektorwinkel der Summen der Ströme in einzelnen Linien angeschlossen sind.

Diese Schaltanordnung sichert eine gute Funktionsweise der Vorrichtung und ist konstruktiv einfach und somit auch wirtschaftlich.

Es ist vorteilhaft, wenn zwischen dem Winkeltransmitter und dem Vergleicher eine galvanische Trennung eingeschaltet ist. Diese Anordnung gewährleistet, dass allfällige Störspannungen unterdrückt werden.

Nach einer Weiterbildung der Erfindung wird zusätzlich die Relais-Anordnung mit einem Handsteuerbetrieb versehen. Diese Lösung ermöglicht bei besonderen Situationen auch den manuellen Eingriff in die sonst automatische Regulierung der Löschspule.

Es ist zweckmässig, wenn die elektronische Vorrichtung zur Feststellung der Vektorwinkel der Summen der Ströme in den einzelnen Linien an ein Alarmtableau angeschlossen ist.

Vorteilhaft ist der Summenstromwandler ein Umbauwandler.

Die Erfindung wird im folgenden anhand schematischer Zeichnungen näher erläutert.

Es zeigt :

Figur 1   eine Anordnung mit einer Sammelschiene und einem Erdschluss, wobei in dem unteren Teil der Fig. 1 die erfindungsgemässe Vorrichtung zur Regulierung der Löschspule und im oberen Teil eine beispielsweise Schaltungsanordnung zur selektiven Erdschlussanzeige gezeigt ist, und

Figur 2   eine Schaltung, die im wesentlichen einen Teil der Anordnung aus Fig. 1 zeigt und die die Bestimmung der kapazitiven Ströme im Netz zur Einstellung der automatischen Löschspulenregulierung darstellt.

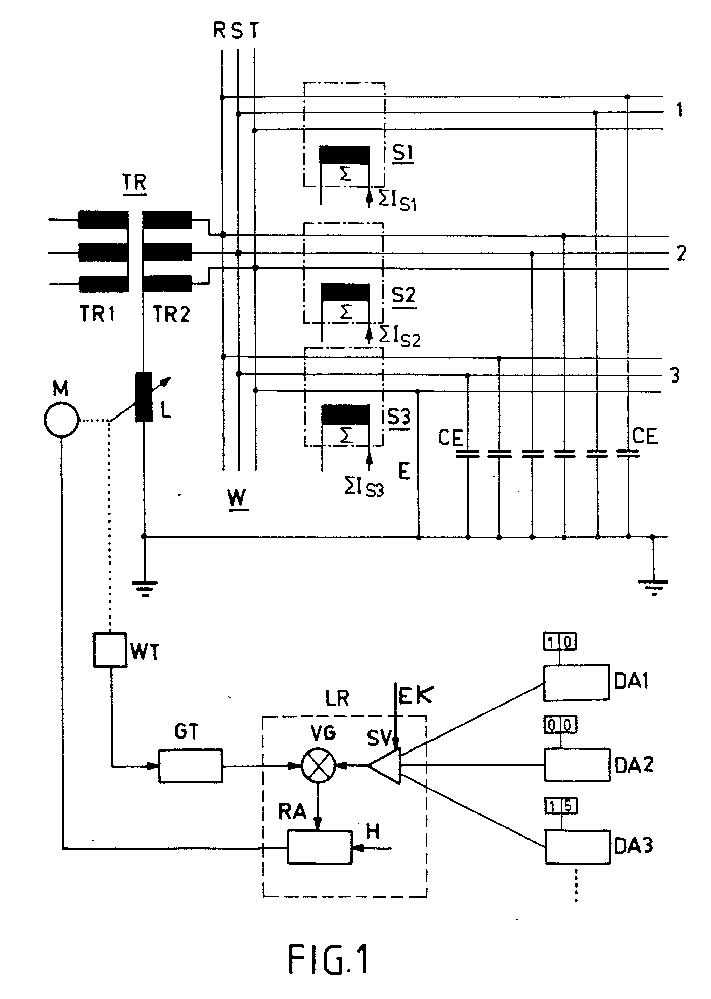

Gemäss Fig. 1 weist ein Transformator TR eine Primärseite TR1 und eine Sekundärseite TR2 in Sternschaltung auf. Der Nullpunkt der Sekundärseite TR2 ist über eine Löschspule L geerdet, die Ausgänge der Sekundärseite TR2 sind an die Sammelschiene W der Phasen R, S, T und somit auch an die zugehörigen dreiphasigen Linien 1, 2, 3 des Netzes angeschlossen. Jede der drei Linien 1, 2, 3 ist mit je einem Summenstromwandler S1, S2, S3 versehen. Mit $\Sigma I_{S1}$ bis $\Sigma I_{S3}$ sind die Ströme in den Summenstromwandlern S1 bis S3 bezeichnet. Die Kapazitäten CE zwischen den Linien 1, 2, 3 und der Erde sind als Kondensatoren symbolisch dargestellt. Ein Erdschluss E mit kapazitivem und ohmschem Strom ist in diesem Beispiel zwischen der Phase T der Linie 3 und der Erde dargestellt.

Die Funktionsweise der selektiven Erdschlussanzeige wurde schon oben beschrieben.

Im unteren Teil der Fig. 1 ist die erfindungsgemässe Vorrichtung zur Regulierung wenigstens einer Löschspule L in einem gelöschten mehrphasigen Netz gezeigt. Drei Digital-Analog-Wandler DA1 bis DA3 sind in diesem Beispiel den Linien 1 bis 3 zugeordnet, wobei weitere Linien und weitere entsprechende Digital-Analog-Wandler vorhanden sein können. Diese Digital-Analog-Wandler DA1 bis DA3 arbeiten im Bereich 0 bis 99 %. Jeder dieser Wandler ist an zwei Codierschalter angeschlossen. Diese Kodierschalter sind je für « Zehner » und « Einer » bestimmt. In dem gezeigten Beispiel zeigt der erste Digital-Analog-Wandler DA1 also 10 %, der zweite Digital-Analog-Wandler DA2 00 % und der dritte Digital-Analog-Wandler DA3 15 %. Diese drei Digital-Analog-Wandler sind an einen Summierverstärker SV angeschlossen, der mit dem Erdschlusskriterium EK verbunden ist und der weiter an einen Vergleicher VG angeschlossen ist. Die Einstellung der Löschspule L ist über einen Winkeltransmitter WT und über eine galvanische Trennung GT in den Vergleicher VG geleitet. Der Vergleicher VG steuert eine Relais-Anordnung RA, die an einen Motorantrieb M angeschlossen ist. Dieser Motorantrieb M dient zur Einstellung der Löschspule L. Die Relais-Anordnung RA kann auch im Handbetrieb arbeiten. Diese Möglichkeit ist mit dem Pfeil H angedeutet. Der Vergleicher VG mit dem Summierverstärker SV, mit dem Erdschlusskriterium EK und und mit der Relais-Anordnung RA bilden die eigentliche Löschspulenregulierung LR. Die Funktionsweise dieser Anordnung ist schon oben beschrieben worden. Um die gewünschte Unter- oder Überkompensation zu erreichen, wird die Verstärkung des Summierverstärkers SV durch das Erdschlusskriterium EK beeinflusst.

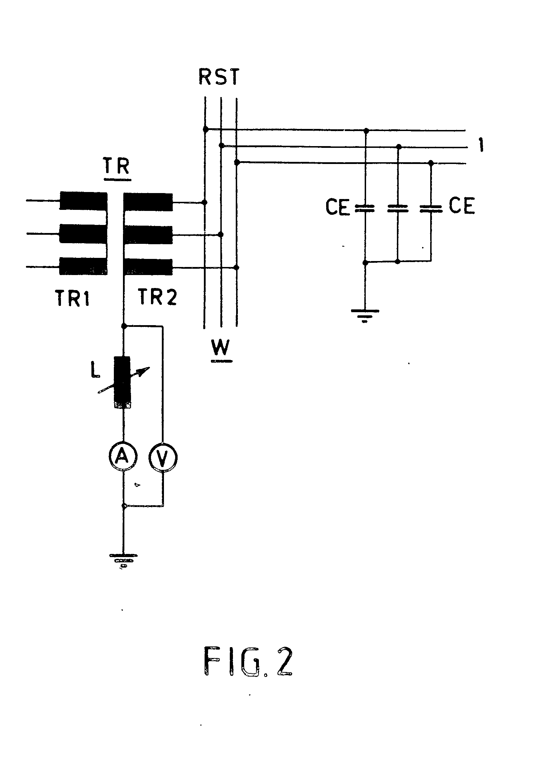

In Fig. 2 ist eine Schaltung aufgezeigt, anhand dieser die Ermittlung und/oder die Berechnung des Sollwertes erläutert wird.

Gemäss Fig. 2 wird eine Linie, in diesem Fall die Linie 1, manuell auf eine Sammelschiene W separat geschaltet. Diese Schaltanordnung dient zur Bestimmung der kapazitiven Ströme im Netz zur Einstellung der automatischen Löschspulenregulierung. Die kapazitiven Ströme der einzelnen Linien werden der Automatik prozentual als Sollwert eingegeben. Um die kapazitiven Ströme feststellen zu können, stellt man die Löschspule L auf Resonanz, d. h. auf das Maximum der Spannung an der Löschspule L, und liest nun den Strom auf der geeichten Löschspule-Stellungsskala ab.

Wenn man den Löschspul-Strom bei gesundem Netz mit $I_{LO}$ bezeichnet, die Löschspulenspannung bei gesundem Netz mit $U_{LO}$, die Netzspannung bei gesundem Netz mit U und den kapazitiven Strom bei Erdschluss mit $I_C$, erhält man folgende Gleichung :

$$I_C = \frac{I_{LO}}{U_{LO}} \cdot \frac{U}{\sqrt{3}}$$

Der Strom $I_{LO}$ der Löschspule L bei gesundem Netz und die Spannung $U_{LO}$ der Löschspule L bei gesundem Netz werden mit dem in Fig. 2 gezeigten Spannungsmesser V und dem Strommesser A gemessen.

Die automatische Regulierung gemäss der vorliegenden Erfindung weist also vorallem zwei Vorteile auf : bei einem System mit mehreren Sammelschienen können sich die Automatiken nicht beeinflussen und es wird auch das Einstellkriterium bei einem eintretenden Erdschluss nicht verloren, und somit werden weggeschaltete Netzteile nachgeregelt.

## Bezeichnungsliste

TR = Transformator
TR1 = Primärseite des Transformators TR
TR2 = Sekundärseite des Transformators TR
L = Löschspule
R, S, T = Phasen des Netzes
W = Sammelschiene
1, 2, 3 = Linien des Netzes
S1, S2, S3 = Summenstromwandler der Linien 1, 2, 3
CE = Kapazitäten zwischen den Linien 1, 2, 3 und der Erde
E = Erdschluss mit kapazitivem und ohmschem Strom
$\Sigma I_{S1}$ bis $\Sigma I_{S3}$ = Ströme in den Summenstromwandlern S1 bis S3
DA1 bis DA3 = Digital-Analog-Wandler
10, 00, 15 = Angaben der Codierschalter
SV = Summierverstärker mit variabler Verstärkung
EK = Erdschlusskriterium
VG = Vergleicher
RA = Relais-Anordnung
H = Handsteuerbetrieb
LR = Löschspulenregulierung
GT = galvanische Trennung
WT = Winkeltransmitter
M = Motorantrieb
V = Spannungsmesser
A = Strommesser

**Patentansprüche**

1. Verfahren zur Regulierung wenigstens einer Löschspule (L) in einem mehrphasigen Netz (1, 2, 3), in dem der Nullpunkt der Sekundärseite (TR2) eines Transformators (TR) über eine Löschspule (L) geerdet ist, wobei die Ausgänge der Sekundärseite (TR2) des Transformators (TR) an die Sammelschiene (W) der Phasen (R, S, T) und somit auch an die zugehörigen Linien (1, 2, 3) des Netzes angeschlossen sind, dadurch gekennzeichnet, dass für die Regulierung der Löschspule (L) im gesunden Netz ein Vorgabewert des kapazitiven Stromes ermittelt wird, der der Summe der Vorgabewerte der kapazitiven Ströme für die Linien (1, 2, 3) des Netzes entspricht, dass dieser Vorgabewert des kapazitiven Stromes, der den Sollwert des kapazitiven Stromes bildet, mit dem über einen Winkeltransmitter (WT) entsprechend der Stellung der Löschspule (L) gelieferten Istwert des induktiven Stromes betragsmässig verglichen wird, dass aus diesem Vergleich des induktiven Ist- und des kapazitiven Sollwertes der Ströme die Steuerung der Löschspule (L) abgeleitet wird, dass der Sollwert des kapazitiven Stromes in einem Summierverstärker (SV) mit einem Erdschlusskriterium (EK) beeinflusst wird und dass der Vorgabewert des kapazitiven Stromes jeder Linie (1, 2, 3) an Codierschaltern eingestellt wird, wobei der Vorgabewert des kapazitiven Stromes für wenigstens eine Linie (1, 2, 3) auf einen Prozentualanteil des Sollwertes des kapazitiven Stromes für den Resonanzfall eingestellt wird.

2. Verfahren nach Anspruch 1, dadurch gekennzeichnet, dass das Steigen oder Sinken des Istwertes des induktiven Stromes der Löschspule (L) solange den Vergleicher (VG) über den Winkeltransmitter (WT) beeinflusst, bis der Betrag des induktiven Istwertes und des kapazitiven Sollwertes der beiden Ströme identisch ist.

3. Verfahren nach Anspruch 1, dadurch gekennzeichnet, dass im gesunden Netz die Löschspule (L) um einen Faktor 0,8 bis 1,2 eingestellt wird und dass somit die gewünschte Unter- oder Überkompensation erreicht wird.

4. Verfahren nach Anspruch 1, dadurch gekennzeichnet, dass der kapazitive Strom im Netz zur Einstellung der Regulierung der Löschspule (L) nach der Gleichung

$$I_C = \frac{I_{LO}}{U_{LO}} \cdot \frac{U}{\sqrt{3}}$$

bestimmt wird, wobei mit $I_C$ der Strom bei Erdschluss mit niederohmiger Fehlerstelle, mit $I_{LO}$ der Strom der Löschspule (L) bei gesundem Netz, mit $U_{LO}$ die Spannung der Löschspule (L) bei gesundem Netz und mit U über $\sqrt{3}$ die Phasenspannung bei gesundem Netz bezeichnet sind.

5. Verfahren nach Anspruch 1, dadurch gekennzeichnet, dass das Erdschlusskriterium (EK) aus einer selektiven Erdschlussanzeige abgeleitet wird, wobei die Summen der Ströme der drei Phasen (R, S, T) in den einzelnen Linien (1, 2, 3) mit je einem Summenstromwandler (S1, S2, S3) erfasst werden, dass die Vektorrichtungen der sekundären Ströme der Summenstromwandler (S1, S2, S3) der einzelnen Linien (1, 2, 3) verglichen werden und dass danach entsprechend der Änderung der Vektorrichtung der Summe des Stromes in einer bestimmten Linie (3) festgestellt wird, dass sich der Erdschluss (E) in dieser Linie (3) befindet.

6. Verfahren nach Anspruch 5, dadurch gekennzeichnet, dass durch die Nulldurchgänge jeder zweiten Halbwelle der Summe des Stromes jeder Linie (1, 2, 3) Rechteck-Impulse generiert werden, deren zeitliche Verschiebungen mit einem, einer Netzabbildung entnommenen Sollwert über eine Kippschaltung verglichen werden und dass danach entsprechend der Änderung der Vektorrichtung der Summe des Stromes in einer bestimmten Linie (3) festgestellt wird, dass sich der Erdschluss (E) in dieser Linie (3) befindet.

7. Verfahren nach Anspruch 6, dadurch gekennzeichnet, dass die Änderung der Vektorrichtung der Summe des Stromes in jeder Linie (1, 2, 3) durch dessen relative zeitliche Verschiebung der Nulldurchgänge festgestellt wird.

8. Vorrichtung zur Regulierung wenigstens einer Löschspule (L) in einem mehrphasigen Netz (1, 2, 3), in dem der Nullpunkt der Sekundärseite (TR2) eines Transformators (TR) über eine Löschspule (L) geerdet ist, wobei die Ausgänge der Sekundärseite (TR2) des Transformators (TR) an die Sammelschiene (W) der Phasen (R, S, T) und somit auch an die zugehörigen Linien (1, 2, 3) des Netzes angeschlossen sind, wobei die Vorrichtung zur Durchführung des Verfahrens nach Anspruch 1 vorgesehen ist, dadurch gekennzeichnet, dass an einen Vergleicher (VG) einerseits Digital-Analog-Wandler (DA1 bis DA3) mit zugehörigen Codierschaltern (10, 00, 15) über einen Summierverstärker (SV) mit variabler Verstärkung, die durch ein Erdschlußkriterium beeinflußt wird, und andererseits ein die Einstellung der Löschspule (L) angebender Winkeltransmitter (WT) angeschlossen sind, wobei der Vergleicher (VG) über eine Relais-Anordnung (RA) mit dem Motorantrieb (M) der Löschspule (L) verbunden ist, dass zur Ableitung des Erdschlußkriteriums in jeder Linie (1, 2, 3) des Netzes ein alle drei Phasen (R, S, T) erfassender Summenstromwandler (S1, S2, S3) angeordnet ist und dass Sekundär-Wicklungen dieses Summenstromwandlers (S1, S2, S3) an eine elektronische Vorrichtung zur Feststellung der Vektorwinkel der Summen der Ströme in einzelnen Linien (1, 2, 3) angeschlossen sind.

9. Vorrichtung nach Anspruch 8, dadurch gekennzeichnet, dass zwischen dem Winkeltransmitter (WT) und dem Vergleicher (VG) eine galvanische Trennung (GT) eingeschaltet ist.

10. Vorrichtung nach Anspruch 8, dadurch gekennzeichnet, dass die Relais-Anordnung (RA) mit einem Handsteuerbetrieb (H) versehen ist.

11. Vorrichtung nach Anspruch 8, dadurch gekennzeichnet, dass die elektronische Vorrichtung zur Feststellung der Vektorwinkel der Summen der Ströme in den einzelnen Linien (1, 2, 3) an ein Alarmtableau angeschlossen ist.

5

**0 083 306**

12. Vorrichtung nach Anspruch 8, dadurch gekennzeichnet, dass der Summenstromwandler (S1, S2, S3) ein Umbauwandler ist.

**Claims**

1. Method of controlling at least one compensation coil (L) in a polyphase network (1, 2, 3), in which the neutral point of the secondary winding (TR2) of a transformer (TR) is earthed via a compensation coil (L), the outputs of the secondary winding (TR2) of the transformer (TR) being connected to the bus bar (W) of the phases (R, S, T) and thereby also to the associated lines (1, 2, 3) of the network, characterised in that for the control of the compensation coil (L) in a correctly functioning network, a predetermined value of the capacitive currents is detected, which corresponds to the sum of the predetermined values of the capacitive currents for the lines (1, 2, 3) of the network, the said predetermined value of the capacitive current which forms the nominal value of the capacitive current is compared numerically with the actual value of the inductive current which is supplied via an angle transmitter (WT) corresponding to the position of the coil (L), the control of the compensation coil (L) is derived from this comparison of the inductive actual value and the capacitive nominal value of the currents, the nominal value of the capacitive current is influenced in a summing amplifier (SV) with an earth connection criterion (EK) and the predetermined value of the capacitive current of each line (1, 2, 3) is set on coding switches, the predetermined value of the capacitive current for at least one line (1, 2, 3) being set at a percentage of the nominal value of the capacitive current for the case of resonance.

2. Method according to claim 1, characterised in that the rise or fall of the actual value of the inductive current of the compensation coil (L) influences the comparator (VG) via the angular transmitter (WT) until the sum of the inductive actual value and the capacitive nominal value of the two currents is equal.

3. Method according to claim 1, characterised in that, in a correctly functioning network, the compensation coil (L) is adjusted by a factor of 0.8 to 1.2 and the desired under- or over compensation is thereby achieved.

4. Method according to claim 1, characterised in that the capacitive current in the network is determined according to the equation

$$I_C = \frac{I_{LO}}{U_{LO}} \cdot \frac{U}{\sqrt{3}}$$

for the adjustment of the control of the compensation coil (L), $I_C$ representing the current with earth connection and a low-resistance fault, $I_{LO}$ representing the current of the compensation coil (L) in a correctly functioning network, and $V_{LO}$ the voltage of the compensation coil in a correctly functioning network and U over $\sqrt{3}$ the phase voltage of the compensation coil (L) in a correctly functioning network.

5. Method according to claim 1, characterised in that the earth connection criterion (EK) is derived from a selective earth connection indicator, the sums of the currents of the three phases (R, S, T) being detected in the individual lines (1, 2, 3) by a summing current transformer (S1, S2, S3) in each case, the vector directions of the secondary currents of the summing current transformers (S1, S2, S3) of the individual lines are compared, and, according to the change in the vector direction of the sum of the current in a particular line (3), it is subsequently determined that the earth connection (E) be disposed in the said line (3).

6. Method according to claim 5, characterised in that as a result of the passage through zero of each alternate half wave of the sum of the current of each line (1, 2, 3) rectangular pulses are generated, the time displacements of which are compared, by means of a sweep circuit, with a nominal value taken from a network representation, and according to the change in the vector direction of the sum of the current in a particular line (3), it is subsequently determined that the earth connection (E) be disposed in the said line (3).

7. Method according to claim 4, characterised in that the change in the vector direction of the sum of the current in each line (1, 2, 3) is determined by its relative time displacement of the passage through zero.

8. Apparatus for controlling at least one compensation coil (L) in a polyphase network (1, 2, 3), in which the neutral point of the secondary winding (TR2) of a transformer (TR) is earthed via a compensation coil (L), the outputs of the secondary winding (TR2) of the transformer (TR) are connected to the bus bar (W) of the phases (R, S, T) and thereby also to the associated lines (1, 2, 3) of the network, the apparatus being provided for performing the method according to claim 1, characterised in that, on the one hand, digital to analog converters (DA1 to DA3) with associated coding switches (10, 00, 15) are connected with variable amplification to a comparator (VG) via a summing amplifier (SV), which is influenced by an earth connection criterion, and on the other hand an angle transmitter (WT) which indicates the setting of the compensation coil (L) is connected to the said comparator (VG), the comparator (VG) being connected via a relay arrangement (RA) to the motor drive (M) of the

6

compensation coil (L), a summing current transformer (S1, S2, S3), which detects all three phases (R, S, T), is arranged in each line (1, 2, 3) of the network for deriving the earth connection criterion, the secondary winding of the said summing current transformer (S1, S2, S3) is connected to an electronic apparatus for determining the vector angle of the sums of the currents in individual lines (1, 2, 3).

9. Apparatus according to claim 8, characterised in that an electrical isolation means (GT) is connected between the angle transmitter (WT) and the comparator (VG).

10. Apparatus according to claim 8, characterised in that the relay arrangement (RA) is provided with a manual control (H).

11. Apparatus according to claim 8, characterised in that the electronic apparatus for determining the vector angle of the sums of the currents in the individual lines (1, 2, 3) is connected to an alarm panel.

12. Apparatus according to claim 8, characterised in that the summing current transformer (S1, S2, S3) is a line-encircling transformer.

## Revendications

1. Procédé pour régler au moins une bobine d'extinction (L) dans un réseau polyphasé (1, 2, 3), dans lequel le point zéro du côté secondaire (TR2) d'un transformateur (TR) est mis à la terre par l'intermédiaire d'une bobine d'extinction (L), les sorties du côté secondaire (TR2) du transformateur (TR) étant reliées à la barre omnibus (W) des phases (R, S, T) et ainsi également aux lignes associées (1, 2, 3) du réseau, caractérisé en ce que, pour le réglage de la bobine d'extinction (L) dans le réseau sain, on détermine une valeur prédéterminée du courant capacitif qui correspond à la somme des valeurs prédéterminées des courants capacitifs pour les lignes (1, 2, 3) du réseau, que cette valeur prédéterminée du courant capacitif constituant la valeur de consigne du courant capacitif est comparée, par l'intermédiaire d'un transmetteur d'angle (WT) à la valeur réelle du courant inductif fournie en fonction du réglage de la bobine d'extinction (L), que, de cette comparaison de la valeur réelle inductive et de la valeur de consigne capacitive des courants, on dérive la commande de la bobine d'extinction (L), que la valeur de consigne du courant capacitif est influencée par un critère de mise à la terre (EK) dans un amplificateur d'addition (SV), que la valeur prédéterminée du courant capacitif de chaque ligne (1, 2, 3) est réglée aux commutateurs de codage, et dans ce cas, la valeur prédéterminée du courant capacitif est réglée pour au moins une ligne (1, 2, 3) sur un pourcentage de la valeur de consigne du courant capacitif pour le cas de résonance.

2. Procédé selon la revendication 1, caractérisé en ce que l'accroissement ou la diminution de la valeur réelle du courant inductif de la bobine d'extinction (L) influence le comparateur (VG) par l'intermédiaire du transmetteur d'angle (WT) jusqu'à ce que la valeur réelle inductive et la valeur de consigne capacitive des deux courants soient identiques.

3. Procédé selon la revendication 1, caractérisé en ce que dans un réseau sain la bobine d'extinction (L) est réglée pour un facteur de 0,8 à 1,2 et qu'on obtient ainsi la sous-compensation ou la surcompensation recherchées.

4. Procédé selon la revendication 1, caractérisé en ce que le courant capacitif dans le réseau pour régler le réglage de la bobine d'extinction (L) est déterminé selon l'équation

$$I_C = \frac{I_{LO}}{U_{LO}} \cdot \frac{U}{\sqrt{3}}$$

dans laquelle $I_C$ désigne le courant dans le cas d'une mise à la terre avec un emplacement défectueux de basse impédance, $I_{LO}$ désigne le courant de la bobine d'extinction (L) dans le réseau sain, $U_{LO}$ désigne la tension de la bobine d'extinction (L) dans le réseau sain, et $U/\sqrt{3}$ la tension de phase dans le réseau sain.

5. Procédé selon la revendication 1, caractérisé en ce que le critère de mise à la terre (EK) est dérivé d'un affichage sélectif de mise à la terre, les totaux des courants des trois phases (R, S, T) dans les lignes individuelles (1, 2, 3) étant saisis respectivement à l'aide d'un transformateur de totalisation (S1, S2, S3), que les directions vectorielles des courants secondaires des transformateurs de totalisation (S1, S2, S3) des lignes individuelles (1, 2, 3) sont comparées, et qu'ensuite, en fonction du changement de direction vectorielle du total du courant dans une ligne déterminée (3), on détermine que la mise à la terre (E) se trouve dans cette ligne (3).

6. Procédé selon la revendication 5, caractérisé en ce que les passages par zéro de chaque deuxième demi-onde du total du courant de chaque ligne (1, 2, 3) produisent des impulsions carrées, dont les décalages chronologiques sont comparés, par l'intermédiaire d'une bascule, avec une valeur de consigne provenant d'une image du réseau, à la suite de quoi on détermine, en fonction du changement de direction vectorielle du total du courant dans une ligne déterminée (3), que la mise à la terre (E) se trouve dans cette ligne (3).

7. Procédé selon la revendication 6, caractérisé en ce que le changement de direction vectorielle du total du courant dans chaque ligne (1, 2, 3) est déterminé par le décalage chronologique relatif des passages par zéro de celui-ci.

7

8. Dispositif pour régler au moins une bobine d'extinction (L) dans un réseau polyphasé (1, 2, 3), dans lequel le point zéro du côté secondaire (TR2) d'un transformateur (TR) est mis à la terre par l'intermédiaire d'une bobine d'extinction (L), les sorties du côté secondaire (TR2) du transformateur (TR) étant raccordées à la barre omnibus (W) des phases (R, S, T), et de ce fait également aux lignes associées (1, 2, 3) du réseau, le dispositif étant prévu pour mettre en œuvre le procédé de la revendication 1, caractérisé en ce qu'on raccorde à un comparateur (VG), d'une part des convertisseurs numériques-analogiques (DA1 à DA3) munis de commutateurs de codage associés (10, 00, 15), par l'intermédiaire d'un amplificateur d'addition (SV) à amplification variable, influencé par un critère de mise à la terre, et d'autre part un transmetteur d'angle (WT) indiquant le réglage de la bobine d'extinction (L), le comparateur (VG) étant relié par un montage de relais (RA) à l'entraînement par moteur (M) de la bobine d'extinction (L), que pour dériver le critère de mise à la terre dans chaque ligne du réseau (1, 2, 3) on dispose un transformateur de totalisation (S1, S2, S3) saisissant toutes les trois phases (R, S, T), et que des enroulements secondaires de ce transformateur de totalisation (S1, S2, S3) sont raccordés à un dispositif électronique pour déterminer l'angle vectoriel des totaux des courants dans les lignes individuelles (1, 2, 3).

9. Dispositif selon la revendication 8, caractérisé en ce qu'on intercale entre le transmetteur d'angle (WT) et le comparateur (VG) une séparation galvanique (GT).

10. Dispositif selon la revendication 8, caractérisé en ce que le montage de relais (RA) est muni d'un système de commande manuelle (H).

11. Dispositif selon la revendication 8, caractérisé en ce que le dispositif électronique pour déterminer les angles vectoriels des totaux des courants dans les lignes individuelles (1, 2, 3) est raccordé à un tableau d'alarme.

12. Dispositif selon la revendication 8, caractérisé en ce que le transformateur de totalisation (S1, S2, S3) est un transformateur modificateur.

**FIG.1**

FIG. 2

2